# EUROPÄISCHE PATENTSCHRIFT

(11) **EP 3 412 504 B1**
(45) Veröffentlichungstag und Bekanntmachung des Hinweises auf die Patenterteilung: **08.01.2020**
(21) Anmeldenummer: 18173471.6
(22) Anmeldetag: 22.05.2018
(51) Int. Cl.: B60N 3/02

(54) **VORRICHTUNG ZUR INTERIEURANBINDUNG IN EINEM NUTZFAHRZEUG**
DEVICE FOR INTERIOR CONNECTION IN A COMMERCIAL VEHICLE
DISPOSITIF DE RACCORDEMENT INTÉRIEUR DANS UN VÉHICULE UTILITAIRE

(30) Priorität: 06.06.2017 DE 102017112427
(43) Veröffentlichungstag der Anmeldung: 12.12.2018
(73) Patentinhaber: MAN Truck & Bus SE, 80995 München (DE)
(72) Erfinder: Stender, Stefan, 82131 Stockdorf (DE); Capellan, Irene, 78270 San Luis Potosi (MX); Siflinger, Markus, 85604 Zorneding (DE)
(74) Vertreter: v. Bezold & Partner Patentanwälte - PartG mbB

(56) Entgegenhaltungen:
- DE-A1-102009 035 768
- US-A1- 2008 018 437
- US-A1- 2010 187 393
- US-A1- 2012 145 861

## Beschreibung

Die Erfindung betrifft eine Vorrichtung zur Anbindung mehrerer Komponenten des Interieurs an einer A-Säule eines Nutzfahrzeugs. Insbesondere ist eine Vorrichtung zur Anbindung einer Anzeigehalterung eines Spiegelersatzsystems an einer A-Säule eines Nutzfahrzeugs bereitgestellt.

Das Dokument US 2012/145861 A1 beschreibt eine Befestigungs- und Aufbewahrungseinrichtung für eine Armatur, welche eine vertikale Befestigungsplatte und eine an der Fahrzeugdecke zu verschraubende Welle umfasst, um welche eine Befestigungsplatte für eine Fahrzeugarmatur drehbar gelagert ist. Die Einrichtung kann wahlweise in einer Sichtposition und in einer Aufbewahrungsposition an der Fahrzeugkarosserie fixiert werden.

Beispielsweise sind in der Europäischen Union zugelassene Nutzfahrzeuge herkömmlicherweise mit sechs Außenspiegeln zur Umfelderfassung ausgestattet. Kamera-Monitor-Systeme (KMS) können die zahlreichen Außenspiegel eines Nutzfahrzeugs ersetzen, und damit dessen Aerodynamik verbessern und dem Fahrer eine verzerrungsfreie Umfeldansicht ermöglichen. KMS können ferner die Verkehrssicherheit durch eine gebündelte Anzeige von Umfeldbereichen erhöhen, die herkömmlicherweise über verschiedene Außenspiegel eingesehen werden. Denn kontrolliert der Fahrer alle drei herkömmlichen Außenspiegel der Beifahrerseite nacheinander, ist der Blick von der Straße, und somit vom Hauptverkehrsgeschehen, für mindestens zwei Sekunden abgewandt.

Das KMS benötigt hierzu eine Anzeigehalterung auf der Höhe der Frontscheibe des Nutzfahrzeugs. Geeignete Anbindungsstellen an der A-Säule für eine solche Anzeigehalterung sind jedoch oftmals nicht vorhanden, insbesondere wenn ausgehend von einem einheitlichen Fahrzeugrohbau Nutzfahrzeuge für unterschiedliche Einsatzgebiete sowohl mit als auch ohne Außenspiegel gefertigt werden. Auch ist der Raum zur Anbindung weiterer Komponenten des Interieurs im Bereich der A-Säule begrenzt. Gegebenenfalls im Fahrzeugrohbau vorgesehen Anbindungsstellen sind beispielsweise durch einen Einstiegsgriff belegt.

Somit ist eine Aufgabe der Erfindung, eine Vorrichtung zur Anbindung mehrerer Interieurkomponenten an der A-Säule eines Nutzfahrzeugs anzugeben. Eine weitere oder alternative Aufgabe der Erfindung ist, eine unfallsichere Anbindung mehrerer Interieurkomponenten zu ermöglichen.

Diese Aufgabe oder Aufgaben werden durch eine Vorrichtung zur Anbindung mehrerer Interieurkomponenten an einer A-Säule eines Nutzfahrzeugs mit den Merkmalen des Anspruchs 1 gelöst.

Gemäß einem Aspekt umfasst die Vorrichtung eine Befestigungsstelle zur Befestigung an der A-Säule innerhalb eines Fahrerhauses des Nutzfahrzeugs; eine erste Anbindungsstelle zur Anbindung einer ersten Komponente des Interieurs des Fahrerhauses; und eine von der ersten Anbindungsstelle verschiedene zweite Anbindungsstelle zur Anbindung einer zweiten Komponente des Interieurs des Fahrerhauses.

Die Befestigungsstelle kann zur drehfesten Befestigung der Vorrichtung bezüglich der A-Säule ausgebildet sein.

Die erste Komponente kann ein Einstiegsgriff innerhalb des Fahrerhauses des Nutzfahrzeugs sein. Die erste Anbindungsstelle kann eine Ausnehmung zur Anbindung eines (oberen) Endes des Einstiegsgriffs aufweisen.

Die zweite Komponente kann eine Anzeigehalterung innerhalb des Fahrerhauses des Nutzfahrzeugs sein. Die zweite Anbindungsstelle kann eine Aufnahme zur Anbindung eines (unteren) Endes der Anzeigehalterung aufweisen.

Die Aufnahme kann ferner eine Arretierung der Anzeigehalterung umfassen, beispielsweise zur Verdrehsicherung und/oder Unfallsicherung der Anzeigehalterung. Beispielsweise kann die Aufnahme einen Klemmring mit einem Längsschlitz umfassen. Die Arretierung kann am Klemmring beiderseits des Längsschlitzes angeordnete Klemmösen umfassen.

Die Aufnahme kann einen polygonalen Querschnitt aufweisen. Die Aufnahme kann zur verdrehsicheren Anbindung eines Fußes der Anzeigehalterung mit entsprechendem Querschnitt ausgebildet sein. Der Fuß kann innerhalb einer Öffnung der Aufnahme mit dem Querschnitt anordenbar sein, oder umgekehrt kann der Fuß eine Öffnung aufweisen, in welcher die Aufnahme anordenbar ist. Alternativ oder ergänzend kann die Aufnahme mindestens eine elastisch gelagerte Rastnase zur Arretierung der Anzeigehalterung umfassen. Beispielsweise kann die Rastnase mit einer Hinterschneidung oder Öffnung am Fuß der Anzeigehalterung zusammenwirken, oder umgekehrt kann die Aufnahme eine Hinterschneidung oder Öffnung (beispielsweise eine Durchgangsöffnung) aufweisen, in welche eine am Fuß der Anzeigehalterung angeordnete Rastnase einzugreifen vermag.

Alternativ oder ergänzend kann die Aufnahme eine Führungsnut umfassen. Die Führungsnut kann in eine Durchgangsöffnung münden, in welche eine Rastnase am Ende der Anzeigehalterung eingreift oder in Eingriff bringbar ist.

Die Befestigungsstelle kann zur Befestigung am Rohbau der A-Säule ausgebildet sein. Die Vorrichtung kann mit der A-Säule ausschließlich an der Befestigungsstelle befestigt sein.

Die Vorrichtung kann, beispielsweise zwischen der Befestigungsstelle und einer Anbindungsstelle (oder beiden Anbindungsstellen) eine Konsole umfassen. Die Konsole kann eine Oberseite und eine der Oberseite gegenüberliegende Unterseite aufweisen. Die Oberseite kann der Befestigungsstelle zugewandt sein. Die Unterseite kann von der Befestigungsstelle abgewandt sein. Die Oberseite und die Unterseite können parallel sein. Im befestigten Zustand der Vorrichtung können sich die Oberseite und/oder die Unterseite der Konsole horizontal und/oder quer zur Längsrichtung der A-Säule erstrecken.

Die erste Anbindungsstelle kann an der Unterseite der Konsole angeordnet sein. Die zweite Anbindungsstelle kann an der Oberseite der Konsole angeordnet sein. Die erste Anbindungsstelle und die zweite Anbindungsstelle können fluchten.

Zwischen der Befestigungsstelle zur A-Säule und der Konsole kann eine Kabelführung, beispielsweise ein offener oder geschlossener Kabelkanal, angeordnet sein. Die Kabelführung kann parallel zur Oberseite sein.

Die Vorrichtung kann eine Anbindung mehrerer Komponenten des Interieurs, insbesondere eines Monitors (auch: Anzeige) und eines Einstiegsgriffs, an der A-Säule über die erste Befestigungsstelle ermöglichen. Hierin kann jede "Anbindungsstelle" eine Stelle an der Vorrichtung sein, die jeweils strukturell zur Anbindung der jeweiligen Komponente ausgebildet ist. Die Anbindungsstellen können zur mechanischen Verbindung ausgebildet sein.

Alternativ oder ergänzend kann die Befestigungsstelle zur strukturseitigen mechanischen Verbindung ausgebildet sein. Die Befestigungsstelle kann dazu ausgebildet sein, die Vorrichtung direkt an einem Strukturteil der A-Säule, d.h. an der A-Säule des Fahrzeugrohbaus, zu befestigen.

Die Vorrichtung kann aus einem Metall oder einer metallischen Legierung gefertigt sein. Beispielsweise kann die Vorrichtung ein (beispielsweise integral-einstückiges) Metallgussteil sein.

Das Nutzfahrzeug kann beispielsweise eine Sattelzugmaschine oder ein Lastkraftwagen zur Güterbeförderung oder ein Bus zur Personenbeförderung sein.

Gemäß weiteren Aspekten ist ein Nutzfahrzeug mit einem Kamera-Monitor-System (KMS), insbesondere als Außenspiegelersatz, bereitgestellt, wobei zumindest ein Monitor des KMS mit einer Vorrichtung gemäß dem vorstehenden Aspekt an der A-Säule des Nutzfahrzeugs angebunden ist. Ferner ist ein Verfahren zur Herstellung eines Nutzfahrzeugs mit dem Einbau einer solchen Vorrichtung bereitgestellt.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: eine perspektivische Schemadarstellung eines ersten Ausführungsbeispiels einer Vorrichtung zur Anbindung mehrerer Interieurkomponenten an einer A-Säule eines Nutzfahrzeugs;
- Figur 2: eine schematische Aufsicht des ersten Ausführungsbeispiels der Vorrichtung der Figur 1;
- Figur 3: eine schematisches Schnittdarstellung des ersten Ausführungsbeispiels der Vorrichtung der Figuren 1 und 2;
- Figur 4: eine perspektivische Schemadarstellung einer Weiterbildung des ersten Ausführungsbeispiels mit einer Anzeigehalterung;
- Figur 5: eine schematische Seitenansicht einer Anbindungsstelle gemäß einem zweiten Ausführungsbeispiel der Vorrichtung;
- Figur 6: eine schematische Aufsicht der Anbindungsstelle gemäß dem zweiten Ausführungsbeispiel der Vorrichtung;
- Figur 7: eine perspektivische Schemadarstellung der Anbindungsstelle gemäß dem zweiten Ausführungsbeispiel der Vorrichtung;
- Figur 8: eine schematische Seitenansicht eines dritten Ausführungsbeispiels der Vorrichtung; und
- Figur 9: eine schematische Aufsicht zur Anordnung der Vorrichtung im Fahrerhaus des Nutzfahrzeugs anhand des ersten Ausführungsbeispiels.

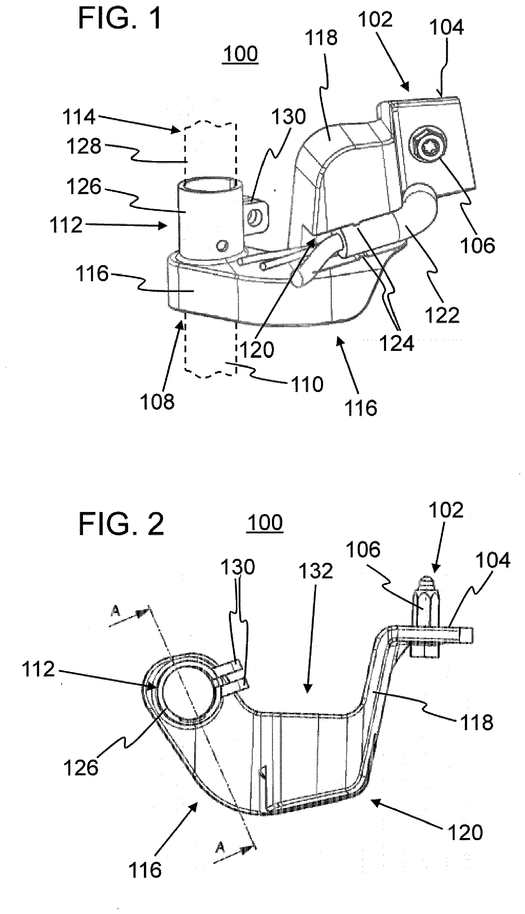

Figur 1 zeigt eine perspektivische Schemadarstellung eines ersten Ausführungsbeispiels einer allgemein mit Bezugszeichen 100 bezeichneten Vorrichtung zur Anbindung mehrerer Interieurkomponenten an einer A-Säule eines Nutzfahrzeugs.

Die Vorrichtung 100 umfasst eine Befestigungsstelle 102 zur (beispielsweise drehfesten) Befestigung an der A-Säule innerhalb eines Fahrerhauses des Nutzfahrzeugs. Im in Figur 1 gezeigten ersten Ausführungsbeispiel umfasst die Befestigungsstelle 102 einen Flansch 104 für mindestens eine Schraubverbindung 106 mit der A-Säule.

Die Vorrichtung umfasst ferner eine erste Anbindungsstelle 108 zur Anbindung einer ersten Komponente 110 des Interieurs des Fahrerhauses und eine von der ersten Anbindungsstelle 108 verschiedene zweite Anbindungsstelle 112 zur Anbindung einer zweiten Komponente 114 des Interieurs des Fahrerhauses. Die erste Komponente umfasst beispielsweise einen Einstiegsgriff 110. Die zweite Komponente umfasst beispielsweise eine Anzeigehalterung 114 für einen Monitor eines KMS.

Die Drehfestigkeit der Vorrichtung im befestigten Zustand kann durch die Befestigungsstelle 102 selbst (beispielsweise durch mehrere Schraubverbindungen 106 an der Befestigungsstelle 102) erreicht sein. Alternativ oder ergänzend kann die Kombination der Befestigungsstelle 102 und der ersten Anbindungsstelle 108 das Moment zur drehfesten Befestigung übertragen.

Zwischen der Befestigungsstelle 102 und der ersten Anbindungsstelle 108 umfasst die Vorrichtung 100 eine Konsole 116. Die Konsole 116 umfasst einen im befestigten Zustand horizontalen Abschnitt der Vorrichtung 100 mit einer Oberseite und einer zur Oberseite parallelen Unterseite. Die erste Anbindungsstelle 108 ist an der Unterseite angeordnet. Die zweite Anbindungsstelle 112 ist an der Oberseite angeordnet.

Ferner umfasst die Vorrichtung 100 zwischen der Befestigungsstelle 102 und der Konsole 116 einen Arm 118. Der Arm 118 erstreckt sich von der Oberseite der Konsole 116, vorzugsweise an einem der zweiten Anbindungsstelle 112 gegenüberliegenden Ende der Konsole 116.

Der Arm 118 verbindet die oberhalb der Oberseite der Konsole 116 angeordnete Befestigungsstelle 102 mit der Konsole 116. D.h. der Arm 118 bestimmt ein erstes Abstandsmaß zwischen der Konsole 116 und der Befestigungsstelle 102 in Richtung der Normalen der Oberseite der Konsole 116. Zudem bestimmt der Arm 118 einen im befestigten Zustand horizontalen Abstand von der Befestigungsstelle 102 an der A-Säule, d.h. ein zweites Abstandsmaß quer zur Normalen der Oberseite der Konsole 116.

Die Vorrichtung 100 umfasst ferner einen Kabelkanal 120, der vorzugsweise in die Konsole 116, insbesondere den Arm 118, integriert ist. Im in Figur 1 gezeigten Ausführungsbeispiel erstreckt sich der Kabelkanal 120 im Arm 118 parallel und angrenzend zur Oberseite der Konsole 116.

Der Kabelkanal 120 hat einen rechteckigen Querschnitt und ist einseitig (nämlich parallel zur Oberseite) geöffnet. Der Kabelkanal 120 ist zur Führung eines Kabelverbunds 122 ausgebildet, der sich beispielsweise von der A-Säule zur zweiten Anbindungsstelle 112 erstreckt. Der Kabelverbund 122 kann elektrische Leitungen zur Stromversorgung und Signalleitungen zu dem an der Anzeigehalterung 114 montierten Monitor umfassen. Eine Kabelarretierung 124, beispielsweise eine den Kabelverbund 122 klemmende Verengung des Kabelkanals 120, fixiert den Kabelverbund 122 in Längsrichtung des Kabelkanals 120 und quer zum Kabelkanal 120 an der offenen Seite.

Im in Figur 1 gezeigten ersten Ausführungsbeispiel der Vorrichtung 100 umfasst die zweite Anbindungsstelle 112 einen in axialer Richtung geschlitzten oder gefrästen Klemmring 126 zur Aufnahme eines zylindrischen Fußes 128 der Anzeigehalterung 114. Beiderseitig des axialen Schlitzes sind am Umfang des Klemmrings 126 Klemmösen 130 angeformt. Durch Zusammenziehen der Klemmösen 130, beispielsweise mittels Schraube und Mutter, wird der Umfang des Klemmrings 126 verkleinert zur kraftschlüssigen Aufnahme des Fußes 128. Zur Verdrehsicherung kann ferner ein Stift in fluchtenden Radialbohrungen des Klemmrings 126 und des darin aufgenommenen zylindrischen Fußes 128 angeordnet sein.

Figur 2 zeigt eine schematische Aufsicht des ersten Ausführungsbeispiels der Vorrichtung 100. Der Arm 118 und die Konsole 116 bilden eine Einbuchtung 132. Im befestigten Zustand gibt die Einbuchtung 132 Raum für eine scharnierseitige Innenverkleidung der A-Säule und/oder einer an der entsprechenden A-Säule angeschlagenen Fahrzeugtüre.

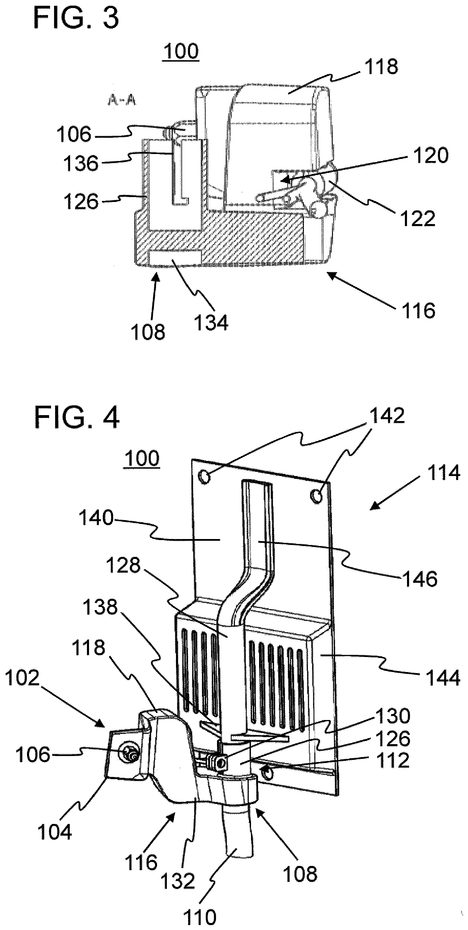

Figur 3 zeigt eine schematische Schnittdarstellung in der in Figur 2 gezeigten Schnittebene A-A. Die erste Anbindungsstelle 108 umfasst eine (beispielweise zylindrische) Ausnehmung 134. Die Ausnehmung 134 ist dazu ausgebildet, ein oberes Ende des Einstiegsgriffs, beispielsweise kraft- oder stoffschlüssig, aufzunehmen. Vorzugsweise sind die Ausnehmung 134 der ersten Anbindungsstelle 108 und der Klemmring 126 der zweiten Anbindungsstelle 112 koaxial.

Der axiale Schlitz 136 im Klemmring 126 (d.h. der Längsschlitz im Mantel des Klemmrings 126) mündet an der Oberseite der Konsole 116 in einen Querschlitz (d.h. einen tangentialen Schlitz im Mantel des Klemmrings 126 parallel zur Oberseite der Konsole 116). Im in Figur 3 gezeigten Ausführungsbeispiel erstreckt sich der Querschlitz nur zu einer Seite des axialen Schlitzes 136 (auch: L-Schlitz). Eine Länge des Querschlitzes kann die Elastizität des Klemmrings 126 unter der Zugkraft an den Klemmösen 130 bestimmen.

Figur 4 zeigt schematisch in einer perspektivischen Darstellung eine Weiterbildung des ersten Ausführungsbeispiels. Die Vorrichtung 100 umfasst ferner die Anzeigehalterung 114.

Im in Figur 4 gezeigten Ausführungsbeispiel umfasst die Anzeigehalterung 114 eine Anschraubfläche 140 mit Durchgangsbohrungen 142 zur Montage des Monitors des KMS. In einem unteren Abschnitt der Anzeigehalterung 114 weist die Schraubfläche eine Ausbuchtung 144 zur Aufnahme einer Anzeigeelektrik des Monitors auf. Schlitze parallel zur vertikalen Längsrichtung des zylindrischen Fußes 128 in der Ausbuchtung der Anzeigehalterung 114 ermöglichen eine Luftzirkulation zur Wärmeabgabe der Anzeigeelektrik. Unterhalb der Lüftungsschlitze ist der Fuß 128 über beidseitige Stege 138 mit der Rückseite der Ausbuchtung verbunden.

Der im unteren Abschnitt der Anzeigehalterung 114 zylindrische Fuß 128 setzt sich in einem oberen Abschnitt der Anzeigehalterung 114 flach gepresst und gekrümmt über eine Flanke der Ausbuchtung 144 fort. Der flach gepresste Fuß 128 ist im oberen Abschnitt mit der Rückseite der Anschraubfläche 140 über eine Schweißverbindung 146 verbunden.

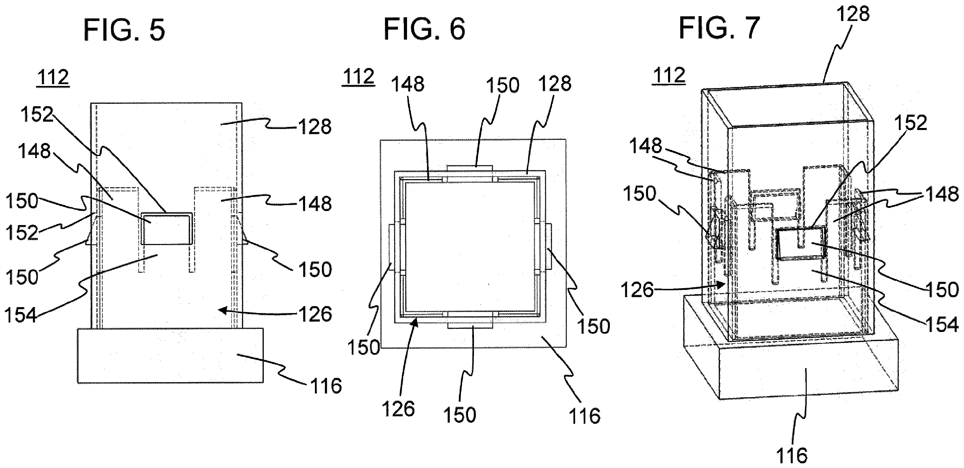

Die Figuren 5 bis 7 zeigen schematisch die zweite Anbindungsstelle 112 gemäß einem zweiten Ausführungsbeispiel der Vorrichtung 100. Weitere Merkmale der Vorrichtung 100, insbesondere die Position der zweiten Anbindungsstelle 112 an der Oberseite der Konsole 116, können mit dem ersten Ausführungsbeispiel übereinstimmen.

Die zweite Anbindungsstelle 112 umfasst eine Aufnahme 126. Die Verdrehsicherung der Anzeigehalterung ist durch eine vierzählige Symmetrie der Aufnahme 126 erreicht. Genauer umfasst die Aufnahme 126 vier Eckwände 148. Zwischen benachbarten Eckwänden 148 ist eine nach außen gerichtete Rastnase 150 federelastisch angeordnet.

Anzeigehalterung 114 umfasst einen Fuß 128 mit quadratischem Querschnitt, der spielfrei über die Aufnahme 126 geschoben werden kann. Die Rastnase 150 greift im montierten Zustand der Anzeigehalterung 114 in Öffnungen 152 des Fußes 128 ein.

Im in den Figuren 5 bis 7 gezeigten Ausführungsbeispiel ist die Rastnase 150 am oberen Ende einer Zunge 154 federelastisch gelagert. Die Zunge 154 ist zwischen den benachbarten Eckwänden 148 angeordnet. Das Material der Aufnahme 126 (beispielsweise Stahlblech), deren Wandstärke und die Länge von Längsschlitzen zwischen der Eckwand 148 und der Zunge 152 bestimmen die Elastizität der Rastnase 150.

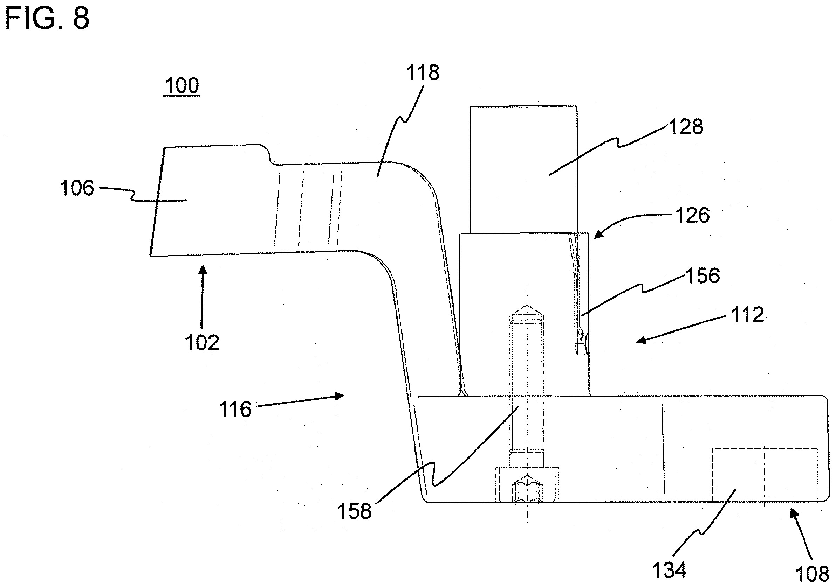

Figur 8 zeigt eine schematische Seitenansicht eines dritten Ausführungsbeispiels der Vorrichtung 100. Das dritte Ausführungsbeispiel kann als eigenständiges Ausführungsbeispiel oder als Weiterbildung des ersten und/oder zweiten Ausführungsbeispiels realisiert werden. Mit dem ersten und/oder zweiten Ausführungsbeispiel übereinstimmende oder austauschbare Merkmale sind mit entsprechenden Bezugszeichen versehen.

Die zweite Anbindungsstelle 112 umfasst eine Aufnahme 126 zur Anbindung der Anzeigehalterung 114. Die Aufnahme 126 ist an der Oberseite der Konsole 116 seitlich versetzt zur ersten Anbindungsstelle 108 (beispielsweise an den Arm 118 angrenzend) angeordnet. Ein Fuß 128 der Anzeigehalterung 114 greift in eine Öffnung der Aufnahme 126 ein.

Der Fuß 128 der Anzeigehalterung 114 ist über eine von der Unterseite der Konsole 116 zugängliche Schraubverbindung 158 mit der Konsole 116 verschraubt. Alternativ ist die Aufnahme 126 mittels der Schraubverbindung an der Konsole 116 befestigt und der Fuß in der Aufnahme 116 arretiert.

Eine äußere Kontur des Fußes 128 und eine innere Kontur der Öffnung der Aufnahme 126 stimmen überein. Die übereinstimmenden Konturen können einen Zylindermantel aufweisen. Alternativ oder abschnittsweise kann ein zur Oberseite paralleler Querschnitt der übereinstimmenden Konturen ein regelmäßiges Polygon zur Verdrehsicherung aufweisen.

In der (in Figur 8 in der Vertikalen gezeigten) Längsrichtung erstreckt sich an der Innenseite der Öffnung der Aufnahme 126 eine Führungsnut 156. Beim Einsetzen des Fußes 128 in die Aufnahme 126 greift ein an der Außenseite des Fußes 128 angeordneter Vorsprung in die Führungsnut 156 ein. Dadurch ist eine Verdrehsicherung der Anzeigehalterung 114 oder verdrehsichere Montage realisiert. Ferner weist die Führungsnut 156 an ihrem unteren Ende einen den Nutgrund vertiefenden Absatz auf oder die Führungsnut 156 mündet an ihrem unteren Ende in eine Durchgangsöffnung der Aufnahme 126. In den Absatz und/oder die Durchgangsöffnung greift der am Fuß 128 federelastisch angeordnete Vorsprung ein zur Arretierung des Fußendes der Anzeigehalterung 114 innerhalb der Aufnahme 126.

Die Merkmale der in den vorstehenden drei Ausführungsbeispielen beschriebenen zweiten Anbindungsstelle 112 sind beliebig kombinierbar. Ferner ist die Ausführung der zweiten Anbindungsstelle zur Anbindung der Anzeigehalterung 114 nicht auf die drei Ausführungsbeispiele beschränkt. Insbesondere kann die zweite Anbindungsstelle durch jede Steckverbindung mit Maßnahmen zur Verdrehsicherung und/oder Unfallsicherung realisiert sein.

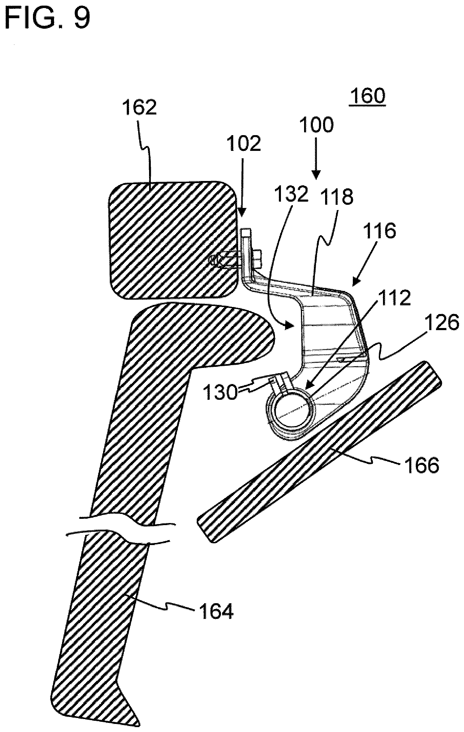

Figur 9 zeigt in einer schematischen Aufsicht eine beispielhafte Anordnung der Vorrichtung 100 innerhalb eines Fahrerhauses 160 des Nutzfahrzeugs. Zur Konkretisierung ist die Anordnung anhand des ersten Ausführungsbeispiels der Vorrichtung 100 dargestellt, wobei jedes weitere Ausführungsbeispiel der Vorrichtung 100 entsprechend anordenbar ist.

Die Befestigungsstelle 102 ist mit der linken A-Säule 162 verschraubt. Unterhalb der Befestigungsstelle 102 ist die linke Fahrzeugtüre 164 des Fahrerhauses 160 an der A-Säule 162 angeschlagen. In der Einbuchtung 132 der Vorrichtung 100 ist ein stationärer Teil der Verkleidung der A-Säule, des Türrahmens der Fahrzeugtüre 164 oder bei geschlossener Fahrzeugtüre 164 ein schwenkbeweglicher Teil der Innenverkleidung der Fahrzeugtüre 164 angeordnet.

Eine Anzeige 166 (auch: Monitor) des KMS ist an der Anzeigehalterung montiert. Eine Anzeigefläche der Anzeige 166 ist parallel zur Anschraubfläche der Anzeigehalterung. Beispielsweise ist die Anzeigefläche und/oder die Anschraubfläche senkrecht zur Oberseite der Konsole. Die Anzeigefläche und/oder die Anschraubfläche können vertikal sein. Eine Normale der Anzeigefläche kann zum Fahrersitz gerichtet sein. Mit der linken Seite des Fahrerhauses 160 (beispielsweise mit der Fläche des Türblatts in der Schließstellung der Fahrzeugtüre 164) kann die Anzeigefläche und/oder die Anschraubfläche einen Winkel zwischen 30° und 90°, beispielsweise zwischen 45° und 60°, einschließen.

Während Figur 9 die Anordnung der Vorrichtung 100 an der linken A-Säule 162 des Fahrerhauses 160 zeigt, kann alternativ oder ergänzend jedes spiegelsymmetrische Ausführungsbeispiel der Vorrichtung 100 an einer rechten A-Säule des Nutzfahrzeugs angeordnet sein.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Vorrichtung zur Anbindung mehrerer Interieurkomponenten
- 102: Befestigungsstelle zur A-Säule
- 104: Flansch der Befestigungsstelle
- 106: Schraubverbindung der Befestigungsstelle
- 108: Erste Anbindungsstelle eines Einstiegsgriffs
- 110: Einstiegsgriff
- 112: Zweite Anbindungsstelle einer Anzeigehalterung
- 114: Anzeigehalterung
- 116: Konsole
- 118: Arm der Konsole
- 120: Kabelkanal
- 122: Kabelverbund
- 124: Kabelarretierung
- 126: Aufnahme, insbesondere Klemmring
- 128: Fuß der Anzeigehalterung
- 130: Klemmösen
- 132: Einbuchtung, insbesondere Kontur gemäß A-Säule
- 134: Ausnehmung der ersten Anbindungsstelle
- 136: L-Schlitz im Klemmring der zweiten Anbindungsstelle
- 138: Steg des Fußes der Anzeigehalterung
- 140: Anschraubfläche der Anzeigehalterung
- 142: Bohrungen in Anschraubfläche
- 144: Ausbuchtung für Anzeigeelektrik
- 146: Schweißverbindung zwischen Fuß und Anschraubfläche
- 148: Eckwand
- 150: Rastnase
- 152: Öffnung in Anzeigehalterung für Rastnase
- 154: Zunge der Rastnase
- 156: Aufnahme mit Führungsnut
- 158: Schraubverbindung zwischen Konsole und Anzeigehalterung
- 160: Fahrerhaus
- 162: A-Säule
- 164: Fahrzeugtüre
- 166: Anzeige

## Patentansprüche

1. Vorrichtung (100) zur Anbindung mehrerer Interieurkomponenten an einer A-Säule (162) eines Nutzfahrzeugs, umfassend:
eine Befestigungsstelle (102) zur drehfesten Befestigung der Vorrichtung an der A-Säule (162) innerhalb eines Fahrerhauses (160) des Nutzfahrzeugs;
eine erste Anbindungsstelle (108) zur Anbindung einer ersten Komponente (110) des Interieurs des Fahrerhauses (160); und
eine von der ersten Anbindungsstelle (108) verschiedene zweite Anbindungsstelle (112) zur Anbindung einer zweiten Komponente (114; 166) des Interieurs des Fahrerhauses (160).

2. Vorrichtung nach Anspruch 1, wobei die erste Komponente einen Einstiegsgriff (110) innerhalb des Fahrerhauses (160) des Nutzfahrzeugs umfasst.

3. Vorrichtung nach Anspruch 2, wobei die erste Anbindungsstelle (108) eine Ausnehmung (134) zur Anbindung eines Endes des Einstiegsgriffs (110) aufweist.

4. Vorrichtung nach einem der Ansprüche 1 bis 3, wobei die zweite Komponente eine Anzeigehalterung (114) innerhalb des Fahrerhauses (160) des Nutzfahrzeugs umfasst.

5. Vorrichtung nach Anspruch 4, wobei die zweite Anbindungsstelle (112) eine Aufnahme (126) zur Anbindung eines Endes der Anzeigehalterung (114) umfasst.

6. Vorrichtung nach Anspruch 5, wobei die Aufnahme (126) eine Arretierung (130, 136; 150; 156, 158) der Anzeigehalterung (114) umfasst.

7. Vorrichtung nach Anspruch 6, wobei die Aufnahme (126) einen Klemmring mit einem Längsschlitz (136) umfasst, und wobei die Arretierung am Klemmring beiderseits des Längsschlitzes (136) angeordnete Klemmösen (130) umfasst.

8. Vorrichtung nach Anspruch 6 oder 7, wobei die Aufnahme (126) einen polygonalen Querschnitt aufweist und mindestens eine elastisch gelagerte Rastnase (150) zur Arretierung der Anzeigehalterung (114) umfasst.

9. Vorrichtung nach einem der Ansprüche 6 bis 8, wobei die Aufnahme (126) eine Führungsnut (156) umfasst, die in eine Durchgangsöffnung mündet, in welche eine Rastnase am Ende der Anzeigehalterung (114) eingreift oder in Eingriff bringbar ist.

10. Vorrichtung nach einem der Ansprüche 1 bis 9, wobei die Befestigungsstelle (102) zur Befestigung am Rohbau der A-Säule (162) ausgebildet ist.

11. Vorrichtung nach einem der Ansprüche 1 bis 10, wobei die Vorrichtung (100) mit der A-Säule (162) ausschließlich an der Befestigungsstelle (102) befestigt ist.

12. Vorrichtung nach einem der Ansprüche 1 bis 11, wobei die Vorrichtung (100) eine Konsole (116) umfasst mit einer Oberseite und einer der Oberseite gegenüberliegenden Unterseite.

13. Vorrichtung nach Anspruch 12, wobei die erste Anbindungsstelle (108) an der Unterseite der Konsole (116) angeordnet ist.

14. Vorrichtung nach Anspruch 12 oder 13, wobei die zweite Anbindungsstelle (112) an der Oberseite der Konsole (116) angeordnet ist.

15. Vorrichtung nach einem der Ansprüche 12 bis 14, wobei zwischen der Befestigungsstelle (102) zur A-Säule und der Konsole eine Kabelführung (120, 124) angeordnet ist.

## Claims

1. Device (100) for connecting several interior components to an A-pillar (162) of a utility vehicle, comprising:
a fixing point (102) for rotationally stationary fixing of the device to the A-pillar (162) inside a driver's cab (160) of the utility vehicle;
a first connecting point (108) for connecting a first component (110) of the interior of the driver's cab (160); and
a second connecting point (112) different from the first connecting point (108) for connecting a second component (114; 166) of the interior of the driver's cab (160).

2. Device according to Claim 1, wherein the first component comprises an entry handle (110) inside the driver's cab (160) of the utility vehicle.

3. Device according to Claim 2, wherein the first connecting point (108) comprises a recess (134) for connecting an end of the entry handle (110).

4. Device according to any of Claims 1 to 3, wherein the second component comprises a display holder (114) inside the driver's cab (160) of the utility vehicle.

5. Device according to Claim 4, wherein the second connecting point (112) comprises a receiver (126) for connecting an end of the display holder (114).

6. Device according to Claim 5, wherein the receiver (126) comprises a locking mechanism (130, 136; 150; 156, 158) for the display holder (114).

7. Device according to Claim 6, wherein the receiver (126) comprises a clamping ring with a longitudinal slot (136) and wherein the locking mechanism comprises clamping eyes (130) arranged on the clamping ring on both sides of the longitudinal slot (136).

8. Device according to Claim 6 or 7, wherein the receiver (126) has a polygonal cross-section and comprises at least one elastically mounted detent lug (150) for locking the display holder (114).

9. Device according to any of Claims 6 to 8, wherein the receiver (126) comprises a guide groove (156) which opens into a through-opening in which a detent lug on the end of the display holder (114) engages or can be brought to engage.

10. Device according to any of Claims 1 to 9, wherein the fixing point (102) is configured for fixing to the skeleton of the A-pillar (162).

11. Device according to any of Claims 1 to 10, wherein the device (100) is attached to the A-pillar (162) exclusively at the fixing point (102).

12. Device according to any of Claims 1 to 11, wherein the device (100) comprises a bracket (116) with a top side and an underside opposite the top side.

13. Device according to Claim 12, wherein the first connecting point (108) is arranged on the underside of the bracket (116).

14. Device according to Claim 12 or 13, wherein the second connecting point (112) is arranged on the top side of the bracket (116).

15. Device according to any of Claims 12 to 14, wherein a cable guide (120, 124) is arranged between the fixing point (102) to the A-pillar and the bracket.

## Revendications

1. Dispositif (100) pour relier plusieurs composants intérieurs à une colonne A (162) d'un véhicule utilitaire, comprenant :
un point de fixation (102) pour la fixation solidaire en rotation du dispositif à la colonne A (162) à l'intérieur d'une cabine de conducteur (160) du véhicule utilitaire ;
un premier point de liaison (108) pour la liaison d'un premier composant (110) de l'intérieur de la cabine de conducteur (160) ; et
un deuxième point de liaison (112) différent du premier point de liaison (108) pour la liaison d'un deuxième composant (114 ; 166) de l'intérieur de la cabine de conducteur (160).

2. Dispositif selon la revendication 1, dans lequel le premier composant comprend une poignée d'entrée (110) à l'intérieur de la cabine de conducteur (116) du véhicule utilitaire.

3. Dispositif selon la revendication 2, dans lequel le premier point de liaison (108) présente un évidement (134) pour la liaison d'une extrémité de la poignée d'entrée (110).

4. Dispositif selon l'une quelconque des revendications 1 à 3, dans lequel le deuxième composant comprend une fixation pour un affichage (114) à l'intérieur de la cabine de conducteur (160) du véhicule utilitaire.

5. Dispositif selon la revendication 4, dans lequel le deuxième point de liaison (112) comprend un logement (126) pour la liaison d'une extrémité de la fixation pour un affichage (114).

6. Dispositif selon la revendication 5, dans lequel le logement (126) comprend une butée (130, 136 ; 150 ; 156, 158) de la fixation pour un affichage (114).

7. Dispositif selon la revendication 6, dans lequel le logement (126) comprend une bague de serrage avec une fente longitudinale (136) et dans lequel la butée comprend des œillets de serrage (130) disposés au niveau de la bague de serrage des deux côtés de la fente longitudinale (136).

8. Dispositif selon la revendication 6 ou 7, dans lequel le logement (126) présente une section transversale polygonale et comprend au moins un ergot d'encliquetage (150) supporté élastiquement pour bloquer la fixation pour un affichage (114).

9. Dispositif selon l'une quelconque des revendications 6 à 8, dans lequel le logement (126) comprend une rainure de guidage (156) qui débouche dans une ouverture de passage dans laquelle un ergot d'encliquetage s'engage ou peut être engagé au niveau de l'extrémité de la fixation pour un affichage (114).

10. Dispositif selon l'une quelconque des revendications 1 à 9, dans lequel le point de fixation (102) est réalisé pour la fixation à la structure de caisse brute de la colonne A (162).

11. Dispositif selon l'une quelconque des revendications 1 à 10, le dispositif (100) étant fixé à la colonne A (162) exclusivement au niveau du point de fixation (102).

12. Dispositif selon l'une quelconque des revendications 1 à 11, le dispositif (100) comprenant une console (116) avec un côté supérieur et un côté inférieur opposé au côté supérieur.

13. Dispositif selon la revendication 12, dans lequel le premier point de liaison (108) est disposé au niveau du côté inférieur de la console (116).

14. Dispositif selon la revendication 12 ou 13, dans lequel le deuxième point de liaison (112) est disposé au niveau du côté supérieur de la console (116).

15. Dispositif selon l'une quelconque des revendications 12 à 14, dans lequel entre le point de fixation (102) à la colonne A et la console est disposé un guide-câble (120, 124).
